# EUROPÄISCHE PATENTSCHRIFT

(11) **EP 2 362 201 B1**
(45) Veröffentlichungstag und Bekanntmachung des Hinweises auf die Patenterteilung: **10.02.2016**
(21) Anmeldenummer: 10154732.1
(22) Anmeldetag: 25.02.2010
(51) Int. Cl.: G01L 1/22, G01L 5/00, G01G 3/14, G01G 19/18, B66C 13/16

(54) **Kraftmess-Hülse, Kraftmess-Körper sowie Mess- und Berechnungsverfahren**
Power measurement sleeve and power measurement device
Douille de mesure de force ainsi que de dispositif de mesure de force

(43) Veröffentlichungstag der Anmeldung: 31.08.2011
(73) Patentinhaber: Brosa AG, 88069 Tettnang (DE)
(72) Erfinder:
(74) Vertreter: Witte, Weller & Partner Patentanwälte mbB

(56) Entgegenhaltungen:
- EP-A1- 1 962 068
- WO-A1-03/073057
- CH-A5- 679 950
- DE-A1- 2 802 947
- DE-A1- 19 960 786
- DE-A1-102009 000 255
- US-A1- 2003 172 740
- US-A1- 2007 266 601
- US-B1- 6 370 971

## Beschreibung

Die Erfindung bezieht sich auf eine Kraftmess-Hülse gemäß Patentanspruch 1 sowie auf ein Mess- und Berechnungsverfahren gemäß der Patentansprüche 6 und 8.

Aus der DE 102 45 768 B4 oder der US 6,370,971 B1 ist zu entnehmen, dass in einen zylinderförmigen Körper beziehungsweise in einer Kraftmass-Hülse zwei umlaufende Nuten eingearbeitet sind, in denen eine Vielzahl von Dehnungsmessstreifen befestigt sind. Die Nuten und die Dehnungsmessstreifen bilden demnach die Messstelle. Die Nuten sind zueinander beabstandet. Von einer den Körper umgreifenden und an diesen anliegenden Hülse wird eine radial auf die Hülse einwirkende Kraft auf den Körper übertragen, die durch die Messstellen gemessen ist. Die radial wirkende Kraft bewirkt eine Durchbiegung des Körpers, der nach dem Stand der Technik als in einem Gehäuse drehfest eingespannte Achse ausgeführt ist.

Solche Kraftmess-Vorrichtungen haben sich zwar in der Praxis bewährt, weisen jedoch den Nachteil auf, dass ausschließlich der Betrag der resultierenden Kraft ermittelt werden kann. Sobald beispielsweise die Winkelposition der resultierenden Kraft in einer anderen Richtung verläuft, ist die Kraftmess-Vorrichtung für diese neue Kraftrichtung neu zu kalibrieren. Insbesondere an Kranauslegerarmen ist es erforderlich, den Umschlingungswinkel eines Seils auf einem Umlenkrad zu kennen, um daraus permanent die resultierende radial wirkende Kraft, die auf das Umlenkrad und damit auf den Auslegearm einwirkt, zu ermitteln.

Der Umschlingungswinkel ist dabei abhängig von dem aus der horizontalen geneigten Winkelstellung des Kranauslegerarms und hängt darüber hinaus auch von dem geometrischen Seilverlauf zur Abstützung des Kranauslegerarmes ab.

Des Weiteren ist bei dem bekannten Stand der Technik als nachteilig anzusehen, dass der Kraftmess-Körper als Achse, also als im Zentrum geschlossener Körper, ausgebildet ist. Oftmals ist es jedoch bei bestimmten Messanwendungen erforderlich, eine Hülse auf eine Achse oder eine Welle aufzuschieben, um mittels der Kraftmess-Hülse die radial wirkenden Kräfte zu messen.

Es ist: daher Aufgabe der Erfindung, zunächst eine Kraftmess-Hülse der eingangs genannten Gattung derart auszubilden, dass diese für ein Mess- und Berechnungsverfahren zur Ermittlung der radial wirkenden Kräfte verwendbar ist. Darüber hinaus soll ein Mess- und Berechnungsverfahren der eingangs genannten Gattung derart weitergebildet sein, dass mit Hilfe der erfindungsgemäßen Kraftmess-Hülse eine Messung und Berechnung der Winkelposition der resultierenden radial einwirkenden Kraft und deren Kraftbetrag bei wechselnden Kraftverläufen und Kraftbelastungen zur Verfügung steht.

Die Aufgabe, die Kraftmess-Hülse konstruktiv in entsprechender Weise auszugestalten, ist erfindungsgemäß durch Patentanspruch 1 gelöst.

Die Aufgabe, ein Mess- und Berechnungsverfahren der eingangs genannten Gattung weiterzubilden, ist erfindungsgemäß durch die Merkmale der kennzeichnenden Teile der Patentansprüche 6 oder 7 gelöst.

Weitere vorteilhafte Weiterbildungen der Erfindung ergeben sich aus den Unteransprüchen.

Dadurch, dass in die äußere Mantelfläche der Kraftmess-Hülse eine Ausnehmung eingearbeitet ist, und dass fluchtend zu der Ausnehmung an der inneren Mantelfläche ein als Kraftübertragungsfläche dienendes Auflager angeformt ist, wird erreicht, dass die aufgenommenen radial wirkenden Kräfte unmittelbar im Bereich der Ausnehmung, also der Messstelle, verlaufen. Folglich ist unabhängig von dem Verwendungszweck der Kraftmess-Hülse eine optimale Kraftermittlung zur Verfügung gestellt.

Da in der Innenmantelfläche mindestens zwei gegenüberliegende Auflager vorgesehen sind, deren Oberflächenkontur konzentrisch verlaufen, ist erreicht, dass die Auflager als Zentrierung für die eingesetzte Achse oder Welle dienen.

Es ist besonders vorteilhaft, wenn eine Vielzahl von Ausnehmungen auf dem Umfang der äußeren Mantelfläche, auf einer Kreisbahn oder schraubenlinienförmig oder auf einer oder mehrerer Kreisbahnen parallel zueinander verlaufend angeordnet sind, denn dadurch kann jeder Messstelle ein entsprechender Messwert in Abhängigkeit von der einwirkenden Radialkraft entnommen werden, so dass bereits durch die Kraftverteilung der einzelnen Messstellen eine Berechnungsmöglichkeit besteht, um die Wirkungsrichtung der resultierenden Kraft und diesen Betrag zu errechnen.

Zudem kann die Kraftmess-Hülse auf eine Achse oder eine Welle aufgeschoben sein, um unmittelbar vor Krafteinleitung in die Achse oder Welle deren Winkelrichtung und Kraftbetrag zu erfassen, so dass eine Vielzahl von Kraftmess-Hülsen auf eine gemeinsame Achse oder Welle aufgeschoben sein können, ohne dass sich die Radialkräfte von benachbarten auf Kraftmess-Hülsen einwirkenden resultierenden Kräften gegenseitig beeinflussen. Auch die Kraftrichtungen können von benachbarten Kraftmess-Hülsen völlig unterschiedlich sein so dass die jeweils resultierende Kraft ermittelt werden kann.

Zusätzlich kann ein Winkelgeber an der Kraftmess-Hülse vorgesehen sein, durch den die Winkelstellung der Hülse bezogen auf eine Ausgangsstellung permanent erfasst ist. Beispielsweise bei Umlenkrädern, an denen ein Seil geführt gehalten ist, verändert sich der Umschlingungswinkel des Seils an dem Umlenkrad in Abhängigkeit von der Neigung eines Kran-Auslegearms. Durch die Messung der Neigungswinkel der Hülse oder des Körpers und in Kenntnis der geometrischen Seilverläufe an dem Kran kann errechnet werden, welcher Umschlingungswinkel für diesen Betriebszustand vorliegt, so dass aus diesem anschließend errechenbar ist, aus welcher Richtung die von der Seilkraft ausgeübte resultierende Kraft auf das Umlenkrad und damit auf die Hülse oder den Körper einwirkt.

In der Zeichnung sind zwei erfindungsgemäße Ausführungsbeispiele einer Kraftmess-Hülse sowie vier Beispiele eines Kraftmess-Körpers dargestellt, die nachfolgend näher erläutert sind.

Einzelnen zeigt:
- Figur 1a: ein erstes Ausführungsbeispiel einer Kraftmess-Hülse, in die eine Achse eingeschoben ist, und in deren äußeren Mantelfläche zwei senkrecht zueinander verlaufende Ausnehmungen zur Bildung einer Messstelle eingearbeitet sind und an deren inneren Mantelfläche vier Ring-Segmente als Auflager angeformt sind, in Draufsicht,
- Figur 1b: die Kraftmess-Hülse gemäß Fig. 1a entlang der Schnittlinie Ib-Ib,
- Figur 1c: die Kraftmess-Hülse gemäß der Schnittlinie Ic-Ic,
- Figur 2a: ein erstes Beispiel eines Kraftmess-Ktirpers mit zwei umlaufende Nuten, in denen jeweils vier Ausnehmungen vorgesehen sind, und auf den ein Umlenkrad zwischen den beiden umlaufenden Nuten angeordnet ist, in Draufsicht,
- Figur 2b: den Kraftmess-Körper gemäß Figur 2a entlang der Schnittlinie IIb-IIb,
- Figur 3a: ein zweites Beispiel eines Kraftmess-Körpers mit zwei umlaufenden Nuten, in denen jeweils zwei gegenüberliegende Ausnehmungen zur Bildung einer Messebene vorgesehen sind, zwischen denen ein Umlenkrad angeordnet ist, in Draufsicht,
- Figur 3b: ein Kraftmess-Körper gemäß Figur 3a entlang der Schnittlinie IIIb-IIIb,
- Figur 4a: ein drittes Beispiel eines Kraftmess-Körpers mit zwei Paaren von Ausnehmungen, die gegenüberliegend zueinander verlaufen und in einem Winkel von kleiner als 90° zueinander versetzt sind, in Draufsicht,
- Figur 4b: den Kraftmess-Körper gemäß Figur 4a in einem schematisch dargestellten Verwendungszweck im Schnitt,
- Figur 4c: den Kraftmess-Körper gemäß 4a entlang der Schnittlinie Vc-IVc in einem Anwendungsbeispiel mit einem Umlenkrad,
- Figur 5a: ein viertes Beispiel eines Kraftmess-Körpers mit zwei umlaufenden Nuten, in denen jeweils zwei Paare von zueinander gegenüberliegenden Ausnehmungen eingearbeitet sind, in Draufsicht,
- Figur 5b: den Kraftmess-Körper gemäß Figur 5a entlang der Schnittlinie Vb-Vb,
- Figur 6a: ein zweites Ausführungsbeispiel einer Kraftmess-Hülse, in die eine Achse eingeschoben ist und in die auf einer Halbseite sieben Ausnehmungen zur Bildung von Messstellen eingearbeitet sind und an der ein Umlenkrad gelagert ist, in Draufsicht und
- Figur 6b: die Kraftmess-Hülse gemäß Figur 6a entlang der Schnittlinie VIb-VIb.

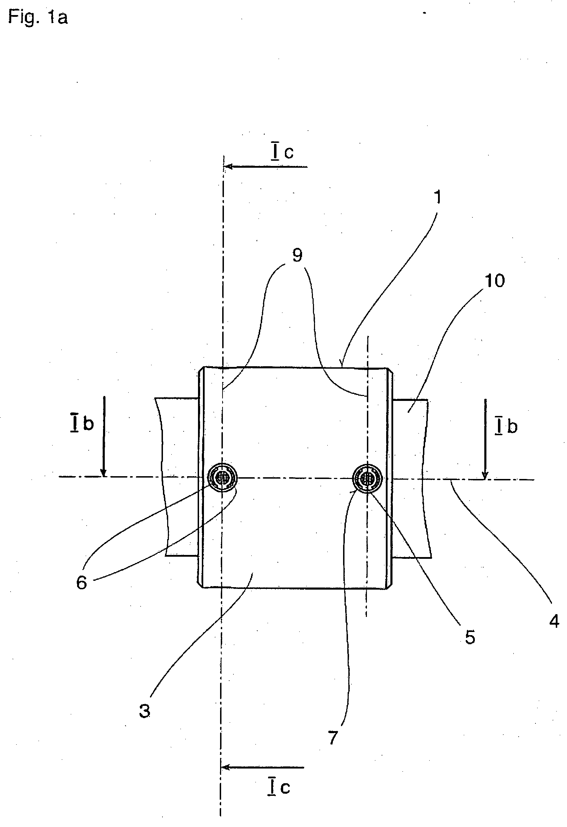

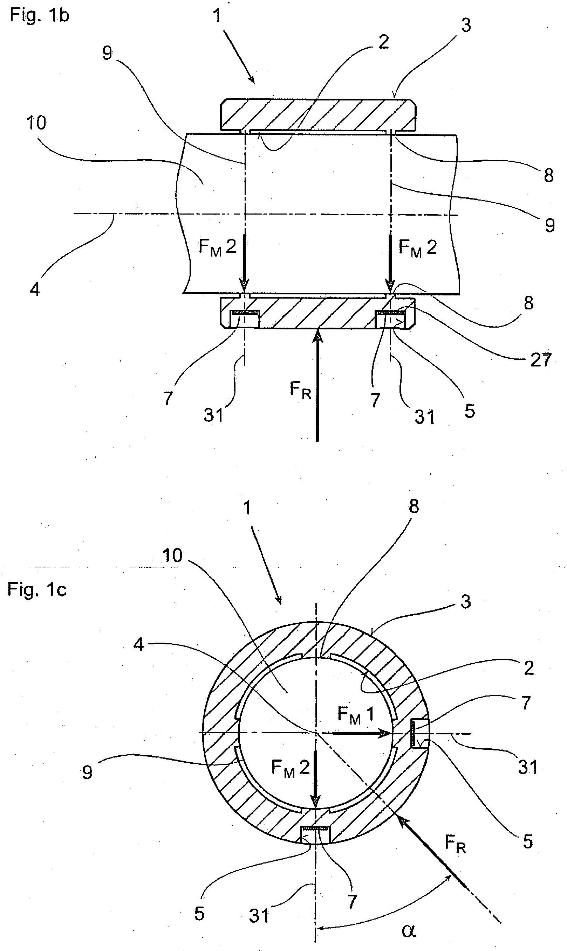

Den Figuren 1a, 1b und 1c ist eine Kraftmess-Hülse 1 zu entnehmen, durch die eine auf diese radial einwirkende Kraft ermittelt werden soll. Die Kraftmess-Hülse 1 weist eine innere und eine äußere Mantelfläche 2 und 3 auf, die jeweils konzentrisch um die Längsachse 4 der Hülse 1 verlaufen. In die Hülse 1 ist eine Achse 10 eingeschoben, die mit der Innenkontur der Hülse 1 eine Spielpassung bildet und die an insgesamt acht Auflagern 8 zentriert gehalten anliegt. Die Auflager 8 sind jeweils als Ring-Segmente ausgestaltet. Jeweils vier der acht Auflager 8 liegen auf einer gemeinsamen Kreisbahn 9. Die beiden Kreisbahnen 9 verlaufen parallel zueinander und um die Längsachse 4.

Die Oberflächenkontur der jeweiligen Auflager 8 ist an den Durchmesser der Achse 10 angepasst, so dass die Achse 10 spielfrei an den acht Auflagern 8 anliegt.

In die Hülse 1 sind insgesamt vier Ausnehmungen 5 eingearbeitet, die rund ausgestaltet sind, so dass durch das Zentrum der jeweiligen Ausnehmung 5 eine Symmetrieachse 31 verläuft. Die Symmetrieachse 31 ist senkrecht zu der Längsachse 4 ausgerichtet. Eines der acht Auflager 8 ist einer der Ausnehmung 5 zugeordnet, und zwar derart, dass die Symmetrieachse 31 der Ausnehmung 5 und die Symmetrieachse der Kreisbahn 9 eine Ebene bilden, die senkrecht zu der Längsachse 4 steht.

An dem Boden der Ausnehmung 5 ist mindestens ein Dehnungsmessstreifen 6 befestigt, der demnach gemein-sam mit der Ausnehmung 5 eine Messstelle 7 bildet. Die Dehnungsmessstreifen 6 werden üblicherweise elektrisch in einer Wheaton'schen-Brücke zusammengeschaltet und sind auf dem Boden verklebt. Es ist auch denkbar, kapazitive, induktive oder optische Messverfahren zu verwenden.

Darüber hinaus kann die Messstelle 7 als Einsatzstück derart ausgestaltet sein, dass diese in eine in die Hülse 1 eingearbeitete Durchgangsbohrung eingeklebt oder eingeschweißt ist, wobei bereits an der der Längsachse 4 zugewandten Oberfläche des Einsatzstückes eines der Auflager 8 angeformt ist.

Insbesondere aus Figur 1c sind die Kraftverläufe, die auf die Hülse 1 einwirken, ersichtlich. Durch die beiden Messstellen 7, die im gezeigten Ausführungsbeispiel senkrecht zueinander stehen, allerdings auch in einem beliebigen Winkel von 180° oder weniger zueinander verlaufen können, werden die von den Auflagern 8, die an der inneren Mantelfläche 2 angeformt sind, übertragenen Messkräfte F_{M1} und F_{M} gemessen.

Aufgrund der Kraftverteilung und des bekannten Winkels zwischen den zwei benachbarten Messstellen 7, kann zunächst die Wirkrichtung α einer resultierenden Kraft F_{R} errechnet werden. Durch die gemessenen Kräfte an den Messstellen 7 ist die Errechnung des Kraftbetrages der resultierenden Kraft F_{R} in der Wirkrichtung α möglich.

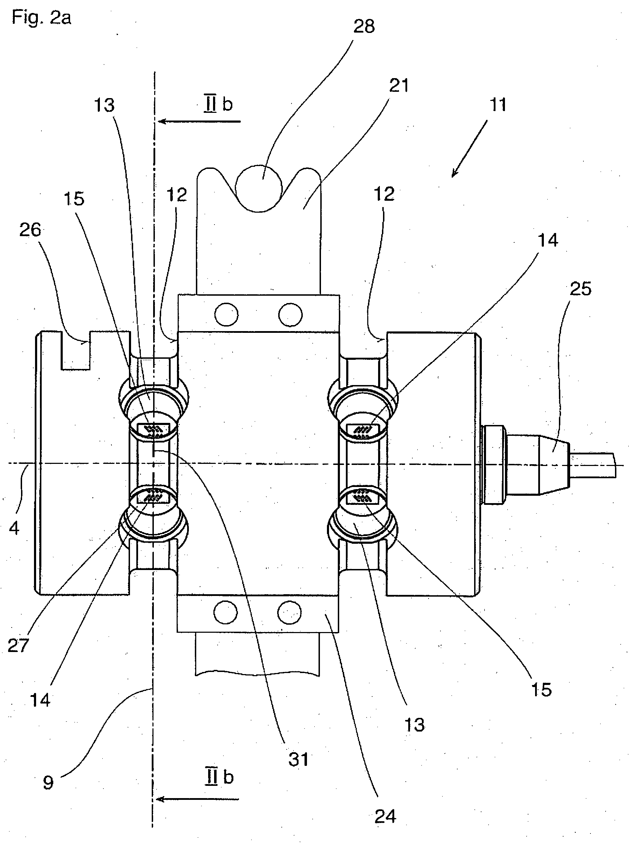

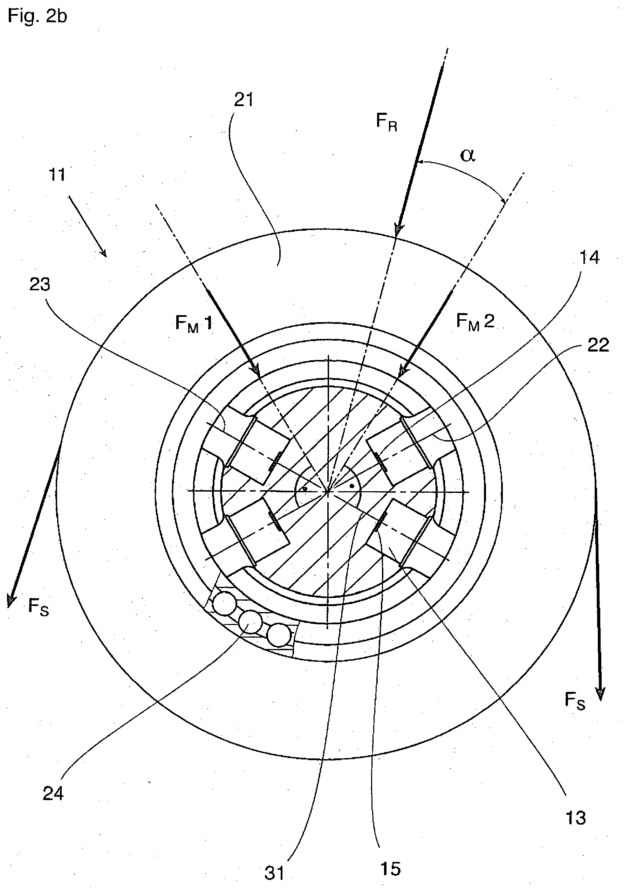

In den Figuren 2a und 2b ist ein Kraftmess-Körper 11 abgebildet. Der Körper 11 dient als Achse und weist somit eine zylinderförmige Außenkontur auf. In den Körper 11 sind zwei um die Längsachse 4 des Körpers 2 ausgerichtete Nuten 12 eingearbeitet.

Die zwischen den zueinander beabstandeten Nuten 12 vorgesehene Mantelfläche des Körpers 11 dient als Kraftübertragungsfläche für ein Lager 24 eines Umlenkrades 21. Durch das Umlenkrad 21 soll ein Seil 28 geführt gehalten sein. Der Körper 11 ist beispielsweise einem Umlenkrad 21 zu dessen Lagerung zugeordnet, durch das am freien Ende eines Kran-Auslegerarmes das Seil 28 zur Aufnahme von Lasten angeordnet ist.

Durch die Veränderung der Winkelstellung des Kran-Auslegerarmes aus der Horizontalen verändert sich in Abhängigkeit der Kranarmneigung der Umschlingungswinkel β an dem Umlenkrad 21. Für solche Winkelveränderungen soll der Kraftmess-Körper 11 sowohl die Wirkrichtung α als auch der Betrag der resultierenden Kraft F_{R} ermittelbar sein.

Die in den Körper 11 eingearbeiteten Nuten 12 weisen dabei jeweils zwei Ausnehmungen 13 auf, an deren Boden 27 jeweils mindestens ein Dehnungsmessstreifen 14 befestigt ist. Die Ausnehmungen 13 und die Dehnungsmessstreifen 14 bilden demnach gemeinsam eine Messsteile 15. Zwei Messstellen 15 liegen gegenüberliegend zueinander und bilden eine gemeinsame Messebene 22, die senkrecht zu der Längsachse 4 verläuft. Gemäß Figur 2b erfolgt die Messung jeder Messkraft senk-recht zu der jeweiligen Messebene 22 bzw. 23.

Des Weiteren ist in die Mantelfläche des Körpers 11 eine Referenzkerbe 26 eingearbeitet, deren Winkelposition bezogen auf eine Ausgangsstellung von einem Winkelgeber 25 permanent gemessen ist. Die Winkelposition der Referenzkerbe 26 liefert Angaben über den Umschlingungswinkel β, so dass in Kenntnis der Winkelposition der Referenzkerbe 26 der Umschlingungswinkel β des Seiles 28 auf dem Umlenkrad 21 errechnet werden kann. Mit Kenntnis des Umschlingungswinkels β ist demnach eine Berechnung der Wirkrichtung α der resultierenden Kraft F_{R} möglich, und zwar bezogen auf eine der beiden Kraftmess-Richtungen F_{M1} oder F_{M2}.

Durch die beiden Messebenen 22 und 23 und die daraus ermittelten Kraftbeträge der Messkräfte F_{M1} und F_{M} ist die Errechnung des Kraftbetrages für die resultierende Kraft F_{R} möglich, so dass mit Hilfe des Kraftmess-Körpers 11 sowohl die Wirkrichtung α als auch der Kraftbetrag der resultierenden Kraft F_{R} gemessen und errechnet werden kann.

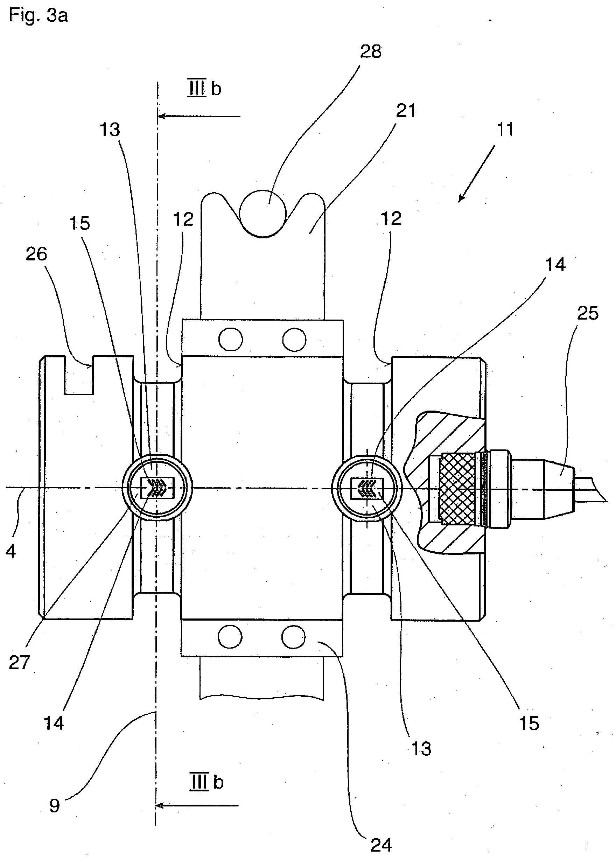

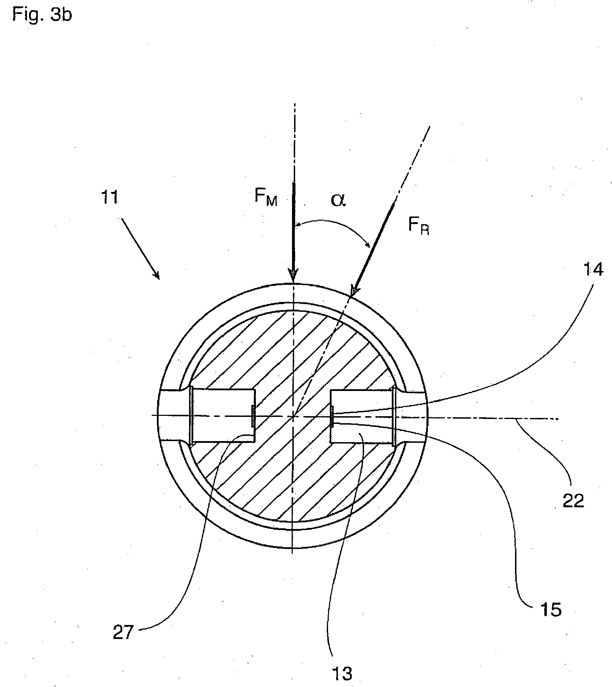

In den Figuren 3a und 3b ist der Kraftmess-Körper 11 derart ausgestaltet, dass in die beiden umlaufenden Nuten 12 lediglich jeweils zwei gegenüberliegende Ausnehmungen 13 eingearbeitet sind, die demnach eine Messebene 22 bilden. Die Messkraft F_{M} verläuft senkrecht zu der Messebene 22. Durch den Winkelgeber 25 wird die Winkelstellung des Körpers 11 gemessen, so dass erneut die Wirkrichtung α einer resultierenden Kraft F_{R} ausgehend von der Messkraft-Richtung F_{M} gemessen und errechnet werden kann.

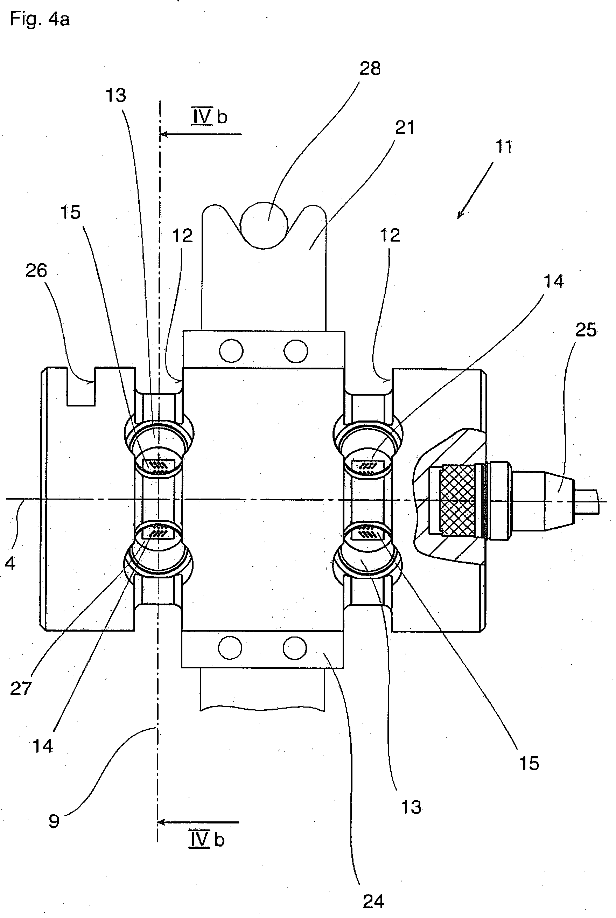

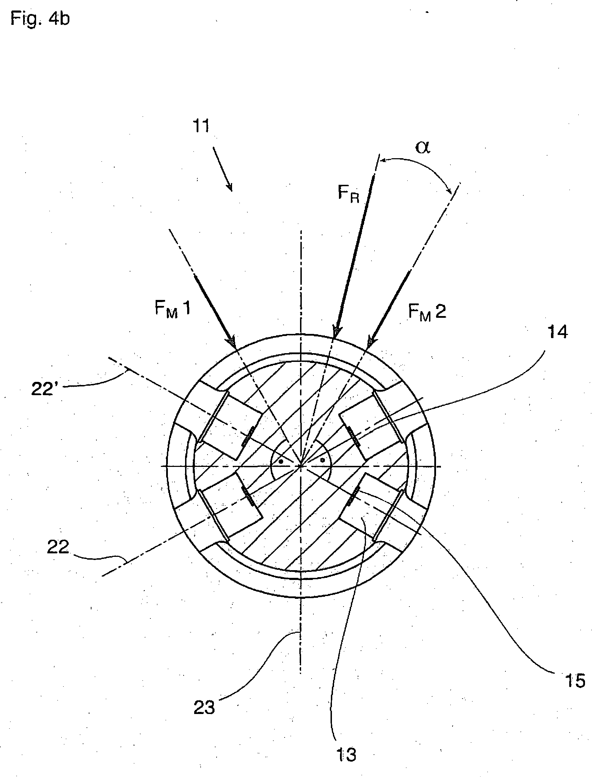

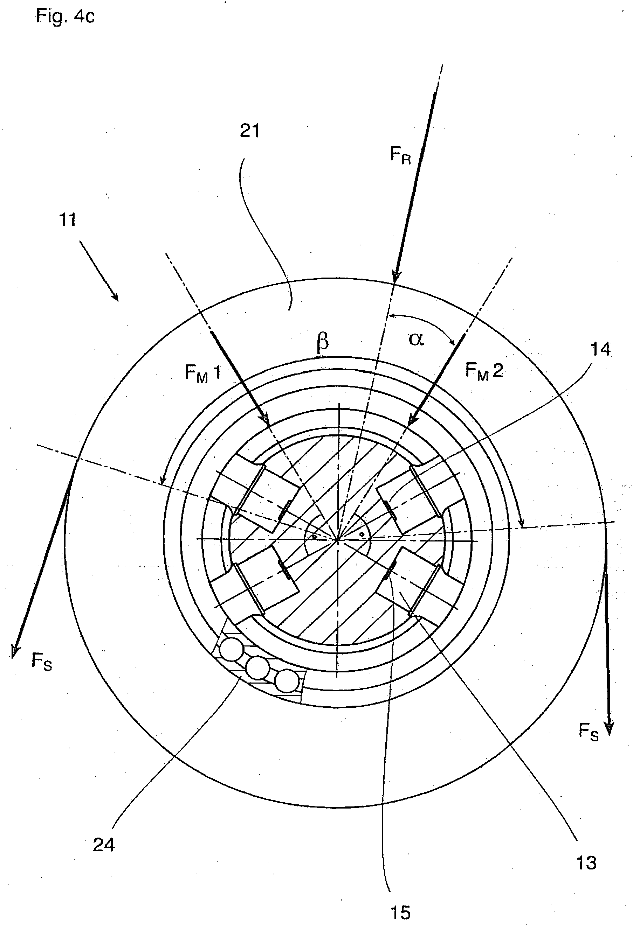

In den Figuren 4a, 4b und 4c ist der Kraftmess-Körper 11 der Figuren 2a und 2b gezeigt; jedoch ist der Anwendungsfall unterschiedlich zu Figur 2a und 2b, denn die Wirkungsrichtung α der resultierenden Kraft F_{R} ist nicht bekannt. Der Umschlingungswinkel β des Seils 28 auf dem Umlenkrad 21 ist vielmehr zu errechnen, und zwar aus der gemessenen Winkelposition des Körpers 11. Die resultierende Kraft verändert ihre Wirkungsrichtung α aufgrund unterschiedlicher Umschlingungswinkel β permanent und in einem groß bemessenen Winkelbereich.

Zu diesem Zweck werden die Messsteilen 15 bzw. die Messebenen 22 oder 23 nacheinander angesteuert, um die auf diese einwirkenden Kraftmessbeträge F_{M1} bzw. F_{M} zu erfassen. Gemeinsam mit der Messung der Winkelposition der Referenzkerbe 26 durch den Winkelgeber 25 können dann Berechnungen angestellt werden, um die Wirkrichtung α der resultierenden Kraft F_{R} zu ermitteln. Auch durch die Messung der Kraftmessbeträge F_{M1} und F_{M2} sind dann in Kenntnis der Wirkrichtung α der resultierenden Kraft F_{R} Berechnungen bezüglich des Kraftbetrages der resultierenden Kraft F_{R} möglich.

In Figur 4b ist ein Anwendungsfall gezeigt, in dem der Körper 11 bereits mit den entsprechenden Messkräften F_{M1} und F_{M} beaufschlagt ist; im Gegensatz dazu ist in Figur 4c der Anwendungsfall dargestellt, dass an dem Körper 11 über das Lager 24 das Umlenkrad 21 rotierbar abgestützt ist. Der in Figur 4b gezeigte Anwendungsfall soll verdeutlichen, dass der Kraftmess-Körper 11 beispielsweise als Achse oder auch als Welle für ein Umlenkrad 21, ein Zahnrad oder dergleichen einsetzbar ist.

Den Figuren: 5a und 5b ist zu entnehmen, dass in die Außenkontur des Kraftmess-Körpers 11 jeweils drei Ausnehmungen 13 in einer der Nuten 12 eingearbeitet sind, um drei Messebenen 22, 22' und 23 zur Verfügung zu stellen.

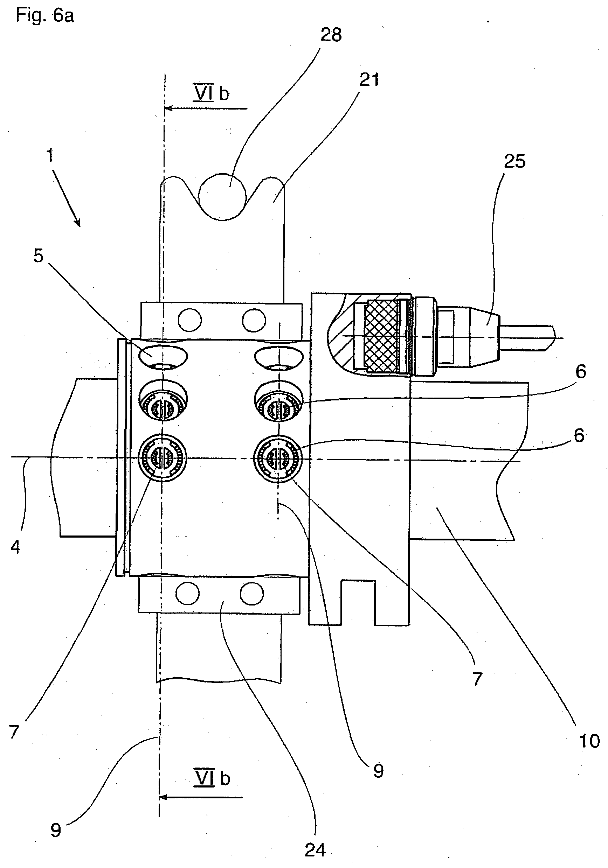

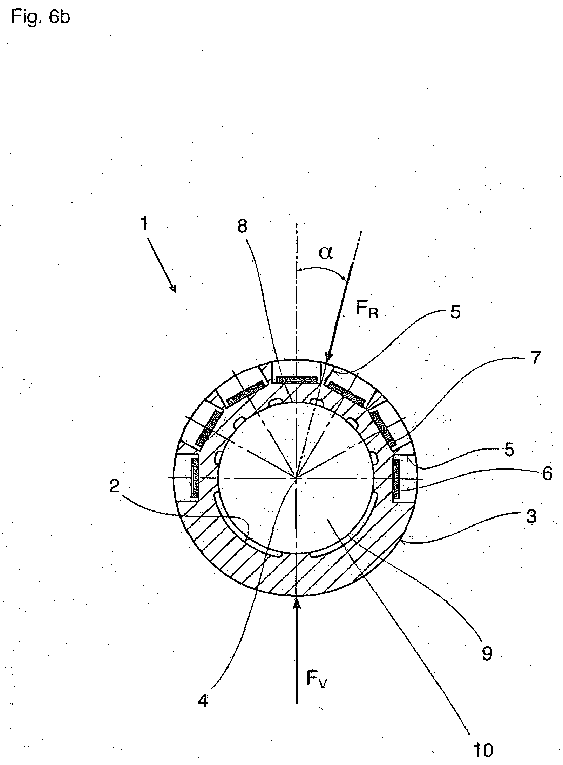

In den Figuren 6a und 6b ist die Kraftmess-Hülse 1 in einer weiteren Ausgestaltung abgebildet. Auf einem oberen Halbkreis der Hülse 1 sind nunmehr sieben Messstellen 7 vorgesehen, so dass die auf die Hülse 1 im Bereich des Halbkreises einwirkende resultierende Kraft F_{R} für jede Messstelle 7 unabhängig voneinander gemessen werden kann. Wenn demnach nicht bekannt ist, aus welcher Richtung α eine resultierende Kraft F_{R} auf die Hülse 1 einwirkt, werden die sieben Messstellen. 7 nacheinander aktiviert, so dass aufgrund der derart gemessenen Kraftbeträge bereits erkannt wird, in welchem Bereich der sieben Messstellen 7 der wesentliche Anteil der resultierenden Kraft F_{R} einwirkt. Die Verwendung der beiden höchsten Kraftmessbeträge und in Kenntnis der Winkelstellung der Hülse 1, in die die Referenzkerbe 26 eingearbeitet ist, deren Winkelposition durch den Winkelgeber 25 gemessen wurde, ist die Berechnung der Wirkrichtung α der resultierenden Kraft F_{R} sowie in Kenntnis der Wirkrichtung α der Kraftbetrag der resultierenden Kraft F_{R} errechenbar.

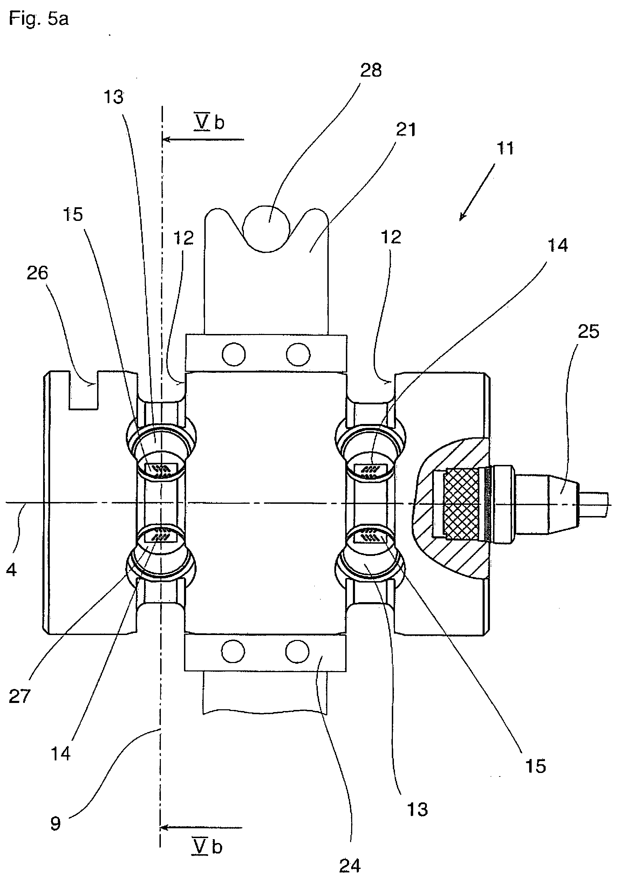

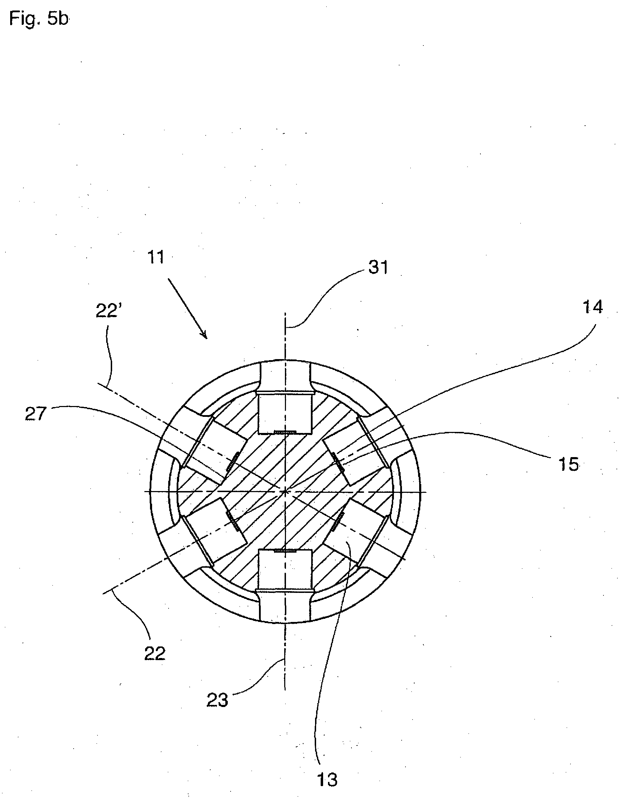

Die in den Figuren 1 bis 6b erläuterten Ausführungsbeispiele und Anwendungsfälle sind zunächst rein beispielhaft zu verstehen. Durch die Kraftmess-Hülse 1 sowie den Kraftmess-Körper 11 soll die Wirkrichtung α und der Betrag der resultierenden Kraft F_{R} gemessen werden können, und zwar unabhängig davon, in welcher Einbausituation diese Bauteile montiert sind. Bereits in Kenntnis von zwei zueinander winkelig beabstandeten Messstellen 7 der Kraftmess-Hülse 1 bzw. von Messebenen 22 oder 23 des Körpers 11 sind Rückschlüsse auf die Wirkrichtung α und auf den Betrag der resultierenden Kraft F_{R} möglich. Wenn der Hülse 1 und dem Körper 11 zusätzlich der Winkelgeber 25 zugeordnet ist, kann auch die Rotation bzw. die Winkelveränderung der Hülse 1 und des Körpers 11 durch diesen ermittelt werden, so dass in Kenntnis eines Kraftbetrages als Messwert F_{M} und der Winkelstellung die Wirkrichtung α und der Betrag, der in Wirkrichtung α verläuft, der resultierenden Kraft F_{R} errechnet werden kann.

Bei einer relativ groß bemessenen Winkelveränderung der Wirkrichtung α ist es erforderlich, zwei oder mehr Messstellen 7 bzw. Messebenen 22, 23 vorzusehen, um entweder durch den Winkelgeber 25 vorab bestimmen zu können, in welchem Bereich der Messstelle 7 oder Messebenen 22, 23 die Wirkrichtung α der resultierenden Kraft F_{R} verläuft, um diese Messstellen 7 bzw. Messebenen 22, 23 anzusteuern. Allerdings kann auch ohne einen Winkelgeber 25 über die nachgeschaltete Ansteuerung der einzelnen Messstellen 7 bzw. der Messebenen 22, 23 die Wirkrichtung α der resultierenden Kraft F_{R} ermittelbar sein. Auch kann beispielsweise über die Summenbildung der gemessenen Kraftbeträge der einzelnen Messstellen 7 bzw. der Messebenen 22, 23 eine Berechnung der Wirkrichtung α und des Kraftbetrages der resultierenden Kraft F_{R} erreicht sein.

## Patentansprüche

1. Kraftmess-Hülse (1) mit einer Längsachse (4) und mit einer inneren und äußeren Mantelfläche (2, 3), die jeweils konzentrisch zu der Längsachse (4) der Hülse (1) ausgerichtet sind, wobei radial in die äußere Mantelfläche (3) mehrere Ausnehmungen (5) eingearbeitet sind, die jeweils eine senkrecht zu der Längsachse (4) verlaufende Symmetrieachse (31) aufweisen, wobei an der inneren Mantelfläche (2) mehrere Auflager (8) angebracht sind, wobei die Auflager (8) und die Ausnehmungen (5) entlang einer Kreisbahn (9), die konzentrisch um die Längsachse (4) der Hülse (1) verläuft, vorgesehen sind, wobei jedes der Auflager (8) als Ring-Segment ausgestaltet ist, wobei die Auflager (8) entlang der Kreisbahn (9) zueinander beabstandet sind und eine Kraftübertragungsfläche definieren, die konzentrisch zur Längsachse (4) orientiert ist, wobei jeweils eines der Auflager (8) radial fluchtend zu jeweils einer der Symmetrieachsen (31) der Ausnehmungen (5) unmittelbar im Bereich der entsprechenden Ausnehmung (5) angeordnet ist und wobei an einem Boden (27) und / oder einer Wand der Ausnehmungen (5) jeweils ein Dehnungsmessstreifen (6) befestigt ist, der zusammen mit der jeweiligen Ausnehmung (5) eine Messstelle (7) bildet.

2. Kraftmess-Hülse nach Anspruch 1, wobei eine Breite der Auflager (8) in der Längsrichtung (4) der Hülse (1) einer Breite der Ausnehmungen (5) in der Längsrichtung (4) entspricht.

3. Kraftmess-Hülse nach Anspruch 1 oder 2, wobei die Ausnehmungen (5) und die Auflager (8) entlang von zwei Kreisbahnen (9) angeordnet sind, wobei die Kreisbahnen (9) parallel und in Längsrichtung (4) der Hülse (1) beabstandet zueinander ausgerichtet sind.

4. Kraftmess-Hülse nach einem der vorgenannten Ansprüche, wobei eine nach innen abstehende Oberflächenkontur der Auflager (8) konkav oder konvex gekrümmt ist, vorzugsweise mit einem Radius, der von der Längsachse (4) zu der Oberflächenkontur verläuft und der konzentrisch zu dem Radius der inneren Mantelfläche (2) ist, und wobei drei oder mehrere der Auflager (8) entlang der Kreisbahn (9) eine gemeinsame Zentrierung bilden.

5. Kraftmess-Hülse nach einem der vorgenannten Ansprüche, wobei zwei Messstellen (7) in einer gemeinsame Ebene senkrecht zur Längsachse (4) liegen und in einem Winkel von kleiner als 180° zueinander angeordnet sind.

6. Mess- und Berechnungsverfahren zur Ermittlung von einer radial wirkenden resultierenden Kraft (F_{R}) mittels einer Kraftmess-Hülse (1) nach einem der Ansprüche 1 bis 5,
mit den folgenden Verfahrensschritten:
- Messen von mehreren Kraftkomponenten (F_{M1}, F_{M2}), die fluchtend zu den Symmetrieachsen (31) der jeweiligen Messstellen (15) verlaufen und die auf die Hülse (1) einwirken,
- Errechnen oder Messen der Winkelposition der Hülse (1) bezogen auf eine Ausgangswinkelstellung,
- Ermitteln der Wirkposition (α) der resultierenden Kraft (F_{R}) bezogen auf die Winkelposition der Hülse (1) und bezogen auf eine der Messstellen (7),
- Errechnen des Betrages der resultierenden Kraft (F_{R}) in Abhängigkeit von den gemessenen Kraftkomponenten (F_{M1}, F_{M2}), die durch die Messstellen (7) gemessen werden.

7. Mess- und Berechnungsverfahren nach Anspruch 6, wobei die Winkelposition der Hülse (1) mittels eines Winkelgeber (25) gemessen wird.

8. Mess- und Berechnungsverfahren zur Ermittlung von radial wirkenden Kräften (F_{R}) mittels einer Kraftmess-Hülse (1) nach einem der Ansprüche 1 bis 5, die in einem Mittelpunkt eines Umlenkrades (21) zu dessen Abstützung angeordnet sind,
mit den nachfolgenden Verfahrensschritten:
- Messen der Winkelposition der Hülse (1) mittels eines Winkelgebers (25),
- Berechnen eines Umschlingungswinkels (β) einer Seilkraft (F_{S}) an dem Umlenkrad (21), bezogen auf die gemessene Winkelposition,
- Errechnen der Wirkrichtung (α) einer auf das Umlenkrad (21) radial einwirkenden resultierenden Kraft (F_{R}) bezogen auf eine der Messstellen (7) in Abhängigkeit von dem Umschlingungswinkel (β),
- Messen der in den jeweiligen Messstellen (7) vorherrschenden Kraftkomponenten (F_{M1}, F_{M2}),
- Errechnen des Betrages der resultierenden Kraft (F_{R}) aus dem Anteil der Kraftkomponente (F_{M1}, F_{M2}), die auf die jeweilige Messstelle (7) einwirkt.

## Claims

1. Force-measuring sleeve (1) having a longitudinal axis (4) and inner and outer circumferential surfaces (2, 3), each being respectively orientated concentrically to the longitudinal axis (4) of the sleeve (1), wherein several recesses (5) are radially worked into the outer circumferential surface (3), wherein each of the recesses comprises a symmetry axis (31) respectively extending perpendicularly to the longitudinal axis (4), wherein several seatings (8) are attached to the inner circumferential surface (2), wherein the seatings (8) and the recesses (5) are provided along a circular path (9) extending concentrically about the longitudinal axis (4) of the sleeve (1), wherein each of the seatings (8) is formed as a ring segment, wherein the seatings (8) are distanced to each other along the circular path (9) and define a power-transmission surface being orientated concentrically to the longitudinal axis (4), wherein respectively one of the seatings (8) is arranged radially aligned to respectively one of the symmetry axis (31) of the recesses (5) in an direct region of the corresponding recess (5), and wherein at a bottom (27) and/or a wall of the recess (5) respectively one strain gauge (6) is fixed which forms a measuring point (7) together with the respective recess (5).

2. The force-measuring sleeve of claim 1, wherein a width of the seatings (8) corresponds in the longitudinal direction (4) of the sleeve (1) to a width of the recesses (5) in the longitudinal direction (4).

3. The force-measuring sleeve of claim 1 or 2, wherein the recesses (5) and the seatings (8) are arranged along two circular paths (9), wherein the circular paths (9) are parallel and orientated in the longitudinal direction (4) of the sleeve (1) distanced to each other.

4. The force-measuring sleeve of one of the preceding claims, wherein a surface contour of the seatings (8), which protrudes inwardly, is curved concave or convex, preferably having a radius which extends from the longitudinal axis (4) towards the surface contour and which is concentrical relative to the radius of the inner circumferential surface (2), and wherein three or more of the seatings (8) commonly form a centralization along the circular path (9).

5. The force-measuring sleeve of one of the preceding claims, wherein two measuring points (7) are in a common plane perpendicular to the longitudinal axis (4) and are arranged in an angle to each other which is smaller than 180°.

6. Measuring and calculating method for determining a resulting force (F_{R}), which acts radially, by means of a force-measuring sleeve (1) of one of the claims 1 - 5, comprising the following method steps:
- measuring several force components (F_{M1}, F_{M2}) extending aligned with the symmetry axis (31) of the respective measuring points (15) and affecting the sleeve (1),
- calculating or measuring the angular position of the sleeve (1) relative to a starting angular position,
- determining the effecting position (α) of the resulting force (F_{R}) relative to the angular position of the sleeve (1) and relative to one of the measuring points (7),
- calculating the amount of the resulting force (F_{R}) dependent on the measured force components (F_{M1}, F_{M2}) measured by the measuring points (7).

7. The measuring and calculating method of claim 6, wherein the angular position of the sleeve (1) is measured by an angle encoder (25).

8. A measuring and calculating method for determining radially acting forces (F_{R}) by a force-measuring sleeve (1) of one of the claims 1 - 5 which is arranged in a center of an idler pulley (21) for support thereof,
comprising the following method steps:
- measuring the angular position of the sleeve (1) by an angle encoder (25),
- calculating an angle of grip (β) of a rope force (F_{S}) at the idler pulley (21) with reference to the measured angular position,
- calculating the effective direction (α) of a resulting force (F_{R}), which acts radially on the idler pulley (21), with reference to one of the measuring points (7) dependent on the angle of grip (β),
- measuring the force components (F_{M1}, F_{M2}) being predominant in the respective measuring points (7),
- calculating the amount of the resulting force (F_{R}) from a portion of the force component (F_{M1}, F_{M2}) acting on the respective measuring point (7).

## Revendications

1. Douille de mesure de force (1) comprenant un axe longitudinal (4) et des surfaces d'enveloppe intérieure et extérieure (2, 3) qui sont orientées à chaque fois concentriquement par rapport à l'axe longitudinal (4) de la douille (1), plusieurs évidements (5) étant pratiqués radialement dans la surface d'enveloppe extérieure (3), lesquels présentent à chaque fois un axe de symétrie (31) s'étendant perpendiculairement à l'axe longitudinal (4), plusieurs appuis (8) étant montés sur la surface d'enveloppe intérieure (2), les appuis (8) et les évidements (5) étant prévus le long d'une trajectoire circulaire (9) qui s'étend concentriquement autour de l'axe longitudinal (4) de la douille (1), chacun des appuis (8) étant configuré sous forme de segment annulaire, les appuis (8) étant espacés les uns des autres le long de la trajectoire circulaire (9) et définissant une surface de transfert de force qui est orientée concentriquement par rapport à l'axe longitudinal (4), l'un des appuis (8) étant à chaque fois disposé radialement en alignement avec à chaque fois l'un des axes de symétrie (31) des évidements (5) directement dans la région de l'évidement correspondant (5) et à chaque fois une bande de mesure d'allongement (6) étant fixée à un fond (27) et/ou à une paroi des évidements (5), laquelle forme une zone de mesure (7) conjointement avec l'évidement respectif (5).

2. Douille de mesure de force selon la revendication 1, dans laquelle une largeur des appuis (8) dans la direction longitudinale (4) de la douille (1) correspond à une largeur des évidements (5) dans la direction longitudinale (4).

3. Douille de mesure de force selon la revendication 1 ou 2, dans laquelle les évidements (5) et les appuis (8) sont disposés le long de deux trajectoires circulaires (9), les trajectoires circulaires (9) étant orientées à distance l'une de l'autre parallèlement et dans la direction longitudinale (4) de la douille (1).

4. Douille de mesure de force selon l'une quelconque des revendications précédentes, dans laquelle un contour de surface des appuis (8) saillant vers l'intérieur présente une courbure concave ou convexe, de préférence avec un rayon qui s'étend depuis l'axe longitudinal (4) jusqu'au contour de surface et qui est concentrique à un rayon de la surface d'enveloppe intérieure (2), et dans laquelle trois ou plus de trois appuis (8) forment un centrage commun le long de la trajectoire circulaire (9).

5. Douille de mesure de force selon l'une quelconque des revendications précédentes, dans laquelle deux zones de mesure (7) sont situées dans un plan commun perpendiculairement à l'axe longitudinal (4) et sont disposées l'une par rapport à l'autre suivant un angle inférieur à 180°.

6. Procédé de mesure et de calcul pour déterminer une force résultante (F_{R}) agissant radialement au moyen d'une douille de mesure de force (1) selon l'une quelconque des revendications 1 à 5, comprenant les étapes de procédé suivantes :
- mesure de plusieurs composantes de force (F_{M1}, F_{M2}) qui s'étendent en alignement avec les axes de symétrie (31) des zones de mesure respectives (15) et qui agissent sur la douille (1),
- calcul ou mesure de la position angulaire de la douille (1) par rapport à une position angulaire de départ,
- détermination de la position d'action (α) de la force résultante (F_{R}) par rapport à la position angulaire de la douille (1) et par rapport à l'une des zones de mesure (7),
- calcul de la valeur de la force résultante (F_{R}) en fonction des composantes de force mesurées (F_{M1}, F_{M2}) qui sont mesurées par les zones de mesure (7).

7. Procédé de mesure et de calcul selon la revendication 6, dans lequel la position angulaire de la douille (1) est mesurée au moyen d'un capteur d'angle (25).

8. Procédé de mesure et de calcul pour déterminer des forces agissant radialement (F_{R}) au moyen d'une douille de mesure de force (1) selon l'une quelconque des revendications 1 à 5, lesquelles sont disposées au centre d'une roue de renvoi (21) en vue de son support, comprenant les étapes de procédé suivantes :
- mesure de la position angulaire de la douille (1) au moyen d'un capteur d'angle (25),
- calcul d'un angle d'enveloppement (β) d'une force d'un câble (F_{S}) au niveau de la roue de renvoi (21), par rapport à la position angulaire mesurée,
- calcul de la direction d'action (α) d'une force résultante (F_{R}) agissant radialement sur la roue de renvoi (21) par rapport à l'une des zones de mesure (7) en fonction de l'angle d'enveloppement (β),
- mesure des composantes de force (F_{M1}, F_{M2}) régnant dans les zones de mesure respectives (7),
- calcul de la valeur de la force résultante (F_{R}) à partir de la proportion de la composante de force (F_{M1}, F_{M2}) qui agit sur la zone de mesure respective (7).
